# EUROPEAN PATENT APPLICATION

(11) **EP 4 001 673 A1**
(43) Date of publication of application: **25.05.2022**
(21) Application number: 20208242.6
(22) Date of filing: 17.11.2020
(51) Int. Cl.: F16B 11/00, F16B 37/04

(54) **METHOD FOR JOINING A FASTENER TO A WORKPIECE**

(71) Applicant: Newfrey LLC, New Britain, CT 06053 (US)
(72) Inventor: Gramsch-Kempkes, Sascha, 35394 Giessen (DE)
(74) Representative: SBD IPAdmin

(57) **Abstract**

Fastener and method for joining a fastener to a workpiece comprising the steps of:
- providing a workpiece (24);
- providing a fastener (10) including an anchor section which extends between a first end section and a second end section along an anchor axis (X); a flange (18) formed on and extending radially to the first end section of the anchor section (12), the flange being radially delimited by an outer edge (20), and the flange at least partially forms an application section (22), the application section being at a non-zero distance from the outer edge, wherein the fastener (10) is a one-piece metal fastener (10);
- applying an adhesive (28) on the application section,
characterized in that the adhesive (28) is an UV-curing adhesive and the method further comprises the steps of
- arranging the flange of the fastener (10) on the carrier surface of the workpiece (24) and pushing said flange (18) against the workpiece such that the adhesive is squeezed toward the outer edges until it reaches the outer edges of the flange (20);
- curing the adhesive (28) at the outer edge (20) of the flange by applying an UV radiation, such that the fastener is pre-assembled to the workpiece;
- finishing the curing of the adhesive (28) underneath the flange by anaerobical curing.

## Description

The present invention relates to a method for joining a fastener to a workpiece, as used in particular, but not exclusive in the car industry. More particularly the invention is directed to a gluing method for joining a fastener to a workpiece.

The present invention is further directed to a fastener for implementing the above-mentioned method.

It is known, for example, in the technical field of joining fasteners to workpieces to weld metallic bolts to metallic workpieces. This method, known as "stud welding", is used, in particular, in the automotive industry in order to weld bolts to car body panels, wherein fixing clips made of plastic are fixed to connect to the bolts, to which fixing clips cables, wires etc. are fixed.

Due to the fact that composite materials that are able to be welded less well or are non-metallic are being increasingly used, for example, in car body construction, such as plastics, fibre composite components, etc., the adhesive bonding technique (or gluing technique or adhering technique) has been established as a joining method in car body panel construction in particular. Instead of welding the bolts to workpieces, they are adhesively bonded (or glued) to the workpiece.

EP3234379A1 discloses a fastener (also called glue stud) with an application area comprising a joining material adapted to be activated by means of heat treatment for forming a joining assembly.

WO2011023683 is directed to a method for joining at least two components using a dual hardening adhesive composition. The glue stud is provided with an adhesive composition comprises two different adhesives, one being for UV curing at the edge and the other adhesive being adapted to cure slower underneath the flange of the stud by a second mechanism. The use of two different adhesive is particularly burdensome and necessitates mixing the two different adhesive.

DE102004012786A1 discloses a method for joining a fastener with a shaft-shaped anchor section, a flange and a joining material which is pre-applied to an application section of the flange. Anchor section and flange are made of an inductively heatable material. The heating of the joining material before the placing on the carrier surface of the workpiece is carried out inductively, by induction energy being introduced into the flange of the fastening element via an inductive field shaper, so that anchor section and flange and also, as a result of this, indirectly, the joining material which has been applied to them, are heated.

After the application of the fastening element to the workpiece, the inductive energy supply is terminated and the adhesive solidifies to produce the adhesive bond.
For mass production, the length of time required to perform the joining method is of particular significance. Besides, the use of a reactive hotmelt concept with induction limits the application to particular surfaces which don't have a high thermal conductivity, in order to avoid a quick heat dissipation, and/or which will not be damaged during a hot curing process.

A method for joining a fastening element to a surface section of a component is known from document DE 10 2009 042 467 A1, wherein the fastening element has an adhesive surface, to which a thermally meltable and curable adhesive is applied, comprising the steps of first preheating the adhesive to a first temperature in order to melt it, heating the surface section to a second temperature and applying the adhesive surface to the surface section, wherein the adhesive, after the adhesive surface is applied to the surface section, is heated to a third temperature in order to cure the adhesive and thereby fasten the fastening element permanently to the component. The various steps of this method can be cumbersome and there is a need to simplify such methods and to further reduce the length of time, at the same time having good joining results. Furthermore, there is a need for a method for joining the fastening element, wherein the fastening element has good storage stability and avoids an undesired chemical cross-linking reaction of the joining material before the actual adhesive method.

It is an object of the present invention to provide a method for joining a fastener, notably a glue stud, to a workpiece which overcomes these drawbacks, and in particular a joining method enabling a wide range of material to be used for a joining process with a glue stud without altering the joining performance or the length of time required to perform the joining.

Accordingly, the present invention provides a method according to claim 1. More particularly the present invention is directed to a method for joining a fastener to a workpiece, the method comprising the steps of:
- providing a workpiece;
- providing a fastener including an anchor section which extends between a first end section and a second end section along an anchor axis; a flange formed on and extending radially to the first end section of the anchor section, the flange being radially delimited by an outer edge, and the flange at least partially forms an application section, the application section being at a non-zero distance from the outer edge, wherein the fastener is a one-piece metal fastener;
- applying an adhesive on the application section;
   Characterized in that the adhesive is an UV-curing adhesive and the method further comprises the steps of
- arranging the flange of the fastener on the carrier surface of the workpiece and pushing said flange against the workpiece such that the adhesive is squeezed toward the outer edges until it reaches the outer edges of the flange;
- curing the adhesive at the outer edge of the flange by applying an UV radiation, such that the faster is pre-assembled to the workpiece;
- finishing the curing of the adhesive underneath the flange by anaerobical curing.

The UV-radiation allows to provide a method which is not dependent on heat. Therefore, it broadens the range of applicable material. Besides, UV curing adhesives can be quickly cured, notably with a cycle time of less than 10 seconds. Thus, the fastener can be pre-assembled to the workpiece such as not to move anymore. The fastener is pre-secured to the workpiece due to the adhesive cured on the edge of its flange and the adhesive underneath the flange can slowly cure. Besides, the application of the adhesive can be made directly at the joining spot, so that no transport of fastener with a pre-applied adhesive is needed. The adhesive on the fastener is cured through two different mechanisms. The first mechanism is UV curing which gives green strength within a few seconds, thus allowing further manipulation of the fastener and the workpiece until the second curing mechanism consisting of the curing in the area underneath the flange ends. The second curing mechanism gives assembly strength.

In an embodiment, the anchor section is a shaft-shaped anchor section. The fastener is for instance a stud with a threaded shaft. However, in other embodiment, the fastener may be a nut plate or any of the type of fastener.

In an embodiment, the application section is arranged at the centre of the flange. For instance, the flange can be circular and the application section is located at the centre of the flange. In other embodiments, the flange may be rectangular or may have any other shape. The flange may also have more than one application section, the applications section being at distance of the outer edge of the flange.

In an embodiment, the outer edge of the flange is provided with notches which are regularly arranged around the outer edges, and wherein the adhesive is squeezed up to the notches such that the adhesive extends at least partially in the notches. The notches form openings in which the adhesive can squeeze. Besides, the notches allow to increase the fillet length.

In an embodiment, the fastener provided with adhesive rotates when facing the workpiece such that the edges of the notches distribute the adhesive. Thus, a better distribution of the adhesive is realized. Such rotation also allows a better mixing of the activator and the adhesive in some cases. However, such rotation is not mandatory. The fastener can be glued to the workpiece without rotation, as long as the adhesive is squeezed up to the edge of the flange.

In an embodiment, the method further comprises the step of applying an activator on the application section before applying the adhesive. Depending on the material used for the fastener, the activator may not be necessary to cure the adhesive. More particularly, for non-metal material, the presence of an activator is necessary, whereas for metal materials, the application of an activator may be avoided.

In an embodiment, the adhesive entirely covers the activator provided on the application section. The adhesive may also just partially cover the activator, and both are mixed during the joining when the fastener is pushed against the workpiece, for example.

In an embodiment, the method further comprises the step of applying an activator on a carrier surface of the workpiece. Depending on the material used for the workpiece, the activator may not be necessary to cure the adhesive.

In an embodiment, the flange comprises a groove and the groove delimits the application section, and wherein the adhesive flows beyond and above the groove to reach the outer edge when the flange is pushed against the workpiece. The groove allows to materially delimit the application section. The groove can be circular. For instance, the flange and the groove are circular. In other embodiment, the flange may have a rectangular shape, and the groove may be circular or rectangular. For manual joining process, the use of a groove is not mandatory.

In an embodiment, the adhesive is applied through a bonding device and a continuous rotation is applied to the fastener or the bonding device during the step of applying the adhesive. The rotation allows a better distribution of the adhesive on the application surface without dropping.

In an embodiment, the fastener provided with the adhesive is moved in rotation until said fastener is pushed against the workpiece. In other words, when handling the fastener before the joining process, the fastener with the adhesive rotates, in order to avoid dropping or losing adhesive but also in order to avoid adhesive being unevenly distributed on the application surface. Indeed, uneven distribution of the adhesive could lead to a not completely closed fillet which could lead to a decreased ageing resistance, UV-fixture strength and bond strength. As previously mentioned, once pushed against the workpiece, the rotation can stop.

In an embodiment, the shaft-shaped anchor section is held by a collet during the step of applying the adhesive, and wherein the collet is connected to a rotation module and rotates the fastener.

In an embodiment, the bonding device further comprises a nozzle for applying the adhesive, and wherein the flange is eccentrically aligned with the nozzle during the step of applying the adhesive.

The present invention is also directed to a fastener adapted to be used according to the method described above, wherein the fastener comprises a shaft-shaped anchor section which extends between a first end section and a second end section along an anchor axis; a flange formed on and extending radially to the first end section of the anchor section, the flange being radially delimited by an outer edge, and the flange at least partially forms an application section, the application section being arranged at the center of the stud, and being at a non-zero distance from the outer edge, wherein the fastener is a one-piece metal fastener, and the outer edge of the flange is provided with notches which are regularly arranged around the outer edges.

In an embodiment, the flange is a circular flange with a flange diameter, and the notches are partly circular and have a notch diameter, and wherein the notch diameter is between 1/20 and 1/5 of the flange diameter.

In an embodiment, the fastener comprises at least three notches.

In an embodiment, the flange comprises a groove, the groove is arranged between the notches and the application section.

In an embodiment, the groove is a circular groove, wherein the groove is at least 0,5 mm deep and extends at least at 0.5mm from the notches. More particularly, a groove of less than 0.5 mm is difficult to realize for such studs. Besides, the groove should be at a minimum distance from the edge of the flange, notably for an automated process in order to avoid the adhesive to leak up to the edge of the flange before the joining process.

A specific embodiment of the present invention will now be described, by way of example only and with reference to the accompanying drawings, of which:
Fig. 1 shows a fastener for performing a joining according to the invention, the fastener comprising a shaft-shaped anchor section, a flange and an adhesive applied on an application section of the flange;
Fig. 2 shows a top view of the fastener of Fig. 1;
Fig. 3A to FIG. 3C schematically show a device for applying adhesive to the flange of the fastener and for joining said fastener to a workpiece.

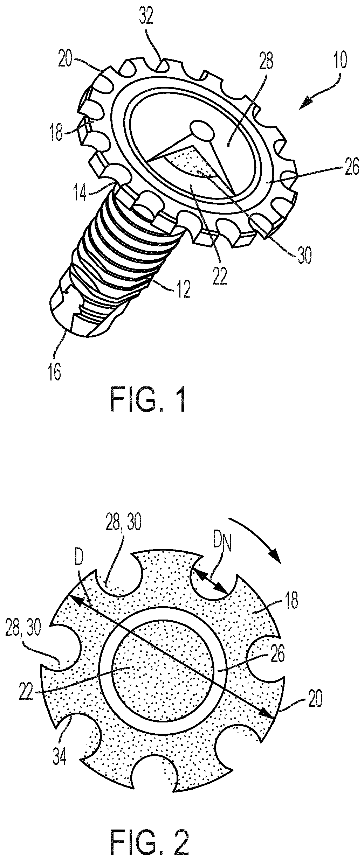

Fig. 1 shows a perspective view of a fastener 10. The fastener 10 comprises a shaft-shaped anchor section 12 which extends between a first end section 14 and a second end section 16 along an anchor axis X. However, the fastener may also comprise an anchor section which is not shaft-shaped. The fastener 10 further comprises a flange 18 formed on and extending radially to the first end section 14 of the anchor section 12. The flange 18 can be a circular flange with a flange diameter D. The flange 18 is radially delimited by an outer edge 20 and comprises an application section 22. This application section 22 forms a joining surface for joining the fastener 10 to a workpiece 24.

The anchor section 12 can be a threaded section adapted to be connected to a component (not shown) to reliably join the workpiece 24 to the component. The fastener is thus a threaded stud for instance.

The anchor section may also be a threaded hole. The fastener can thus be a nut plate.

The application section 22 is formed on the flange 18 on its face opposite the anchor section 12. The application section 22 is for instance arranged at the centre of the flange and extend at a predetermined distance from the edge 20. The application section 22 is for example delimited by a groove 26 arranged on the flange 18. The groove 26 can be a circular groove.

In another embodiment (not shown), the flange may comprise two or more application sections. The application sections are at a non-zero distance from the outer edge of the flange.

The application section 22 is adapted to receive an adhesive 28. In the present case the adhesive is an UV-curing adhesive, and more particularly an UV-dual curing adhesive, adapted to be cured by a UV radiation and/or by an activator 30 and/or an anaerobical reaction.

Before applying the adhesive 28, the application section 22 can be prepared, and an activator 30 can be applied first on the application section 22. The use of an activator 30 is not mandatory. Notably if the stud is composed of a material which is reactive with regards to anaerobic curing reactions, like copper for instance.

The activator 30 can be applied manually or automatically. The section for applying the activator 30 can correspond to the application section 22 or can be a smaller area. For instance, a drop or spray applicator can be used to apply the activator on the application section.

The groove 28 is notably adapted to prevent the activator 30 to spread beyond the application section 22. The activator 30 usually comprises a solvent-based part and a curing accelerating part. Once the activator 30 has been applied on the application section 22 (or any other section where the activator can be later mixed with the adhesive), the solvent-based part flashes off and the curing accelerating part remains at the surface of the application area. Generally, the solvent-based part flashes off in 20 to 60 seconds. The flash off time can be reduced with air flow. The activator remains active for several hours.

The adhesive 28 is applied on the application section 22, either directly (if for instance the fastener is composed of a material which is reactive with regards to anaerobic curing reactions, like copper), or after the application of the activator 30 as described above.

The adhesive 28 is an UV-curing adhesive. The adhesive 28 may be applied manually or automatically. The adhesive 28 is applied on top of the activator and cover the activator. The adhesive 28 is applied on the application section 22 and does not spread beyond the groove 26, when applied. The adhesive 28 is thus applied at a distance from the edge 20 of the flange 18.

Before joining the fastener 10 to the workpiece 24, the workpiece 24 can eventually be prepared and an activator can be applied on the workpiece 24. The activator is for instance the same as the one used on the fastener 10. The activator is applied manually or automatically. The activator usually comprises a solvent-based part and a curing accelerating part. Once the activator has been applied on the workpiece, and more particularly on the section of the workpiece destined to receive the fastener, the solvent-based part flashes off and the curing accelerating part remains at the surface of the workpiece. The activator remains functional for several hours. The use of an activator on the workpiece is not mandatory, notably if a material is used is considered as being reactive with respect to anaerobic curing reactions (for instance copper).

For joining the fastener 10 to the workpiece 24, the flange 18 of the fastener 10 with the adhesive 28 pre-applied, is pushed against the workpiece 24 (and more particularly a section of the workpiece destined to receive it). The pre-applied adhesive 28 is then squeezed out up to the outer edge of the flange and slightly spread over the flange 18. The adhesive 28 squeezed out at the outer edge 20 of the flange 18 is then cured via UV radiation at the fillet of the flange 18. Thus, a pre-assembly of the fastener 10 on the workpiece is made, the cured adhesive at the fillet of the flange 22 allows the fastener 10 to be maintained in place and thus the adhesive 28 under the flange 18 (non-visible and thus not cured by UV radiation) can slowly cure through the reaction notably between the activator 30 and the adhesive 28.

Once the UV radiation has been made and the adhesive 28 squeezed at the fillet of the flange is cured, the workpiece 24 can be further used for other applications. Notably on automotive assembly lines, the fastener is first joined to the workpiece and then used hours later to assemble a component through the fastener. With the present fastener 10 being pre-assembled on the workpiece just by UV radiation, the workpiece can move forward in the vehicle manufacturing line assembly, thus saving manufacturing time.

The outer edge 20 of the flange 18 may be provided with notches 32, as seen in Fig. 1 and Fig. 2. The notches 32 may be regularly arranged around the outer edge. The notches 32 are for instance C-shaped or circular or semi-circular as depicted in Fig. 1 and Fig. 2, but they also can be V-shaped or U-shaped. The notches 32 form openings 34. The notches 32 increase the total length of the section where the adhesive 28 can be cured through UV radiation. So, the notches 32 allow to increase the joining forces at the edge of the flange 18. The notch diameter Dn is for example between 1/20 and 1/5 of the flange diameter D.

In an embodiment, the fastener 10 can rotate when it comes into contact with the workpiece 24. The rotation can accelerate the mixing of the activator and the adhesive. Besides, the rotation squeezes the adhesive 28 toward the edges 20 and the openings 34 provided by the notches. The adhesive 28 is pushed toward the edges of the notches 32. When the rotation stops, enough adhesive 28 remains in the opening 34 formed by the notches 32. More particularly, the adhesive 28 is concentrated on the edge of the flange. The adhesive 28 can thus be cured via UV-radiation at the edge 20. Only the adhesive visible is cured by the UV radiation. This allows to perform a first bonding between the workpiece 24 and the fastener at the edge 20 of the flange 18. This allows a certain amount of bonding strength, especially with respect to assembly torque loads.

Following the UV-curing the adhesive 28 chemically cures underneath the remaining fastener's flange due to the activator and the adhesive being mixed, giving the joint ultimate strength. Anaerobically curing is used.

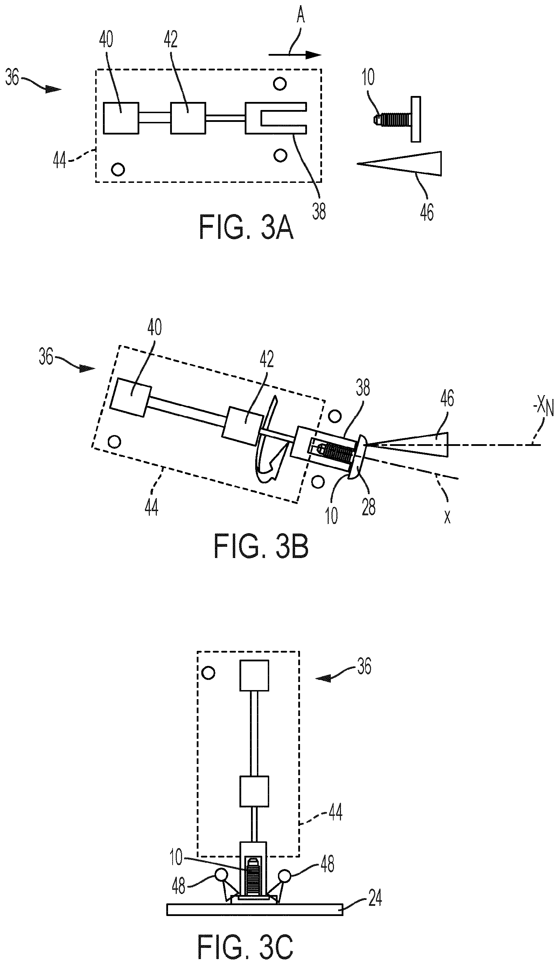

For an automatic assembly of the fastener 10 to the workpiece 24, a joining device 36 can be used, as schematically depicted in fig. 3A to Fig. 3C. The joining device 36 comprises for instance a collet 38 adapted to receive the anchor section 12 of the fastener 10, a linear drive 40 and a rotation module 42 adapted to drive the collet 38 in order to linearly move and rotate the collet 38, and thus actuate the fastener 10 when the anchor section 12 is received in the collet 38.

Fig. 3A shows the joining device 36 with the collet 38 in a rest position. In order to load the fastener 10, the collet 38 can for example move forward in the direction of arrow A until the collet extends outside the casing of the joining device. The anchor section 12 of the fastener 10 can then be inserted inside the collet 38 and maintained in the collet 38.

Eventually a rotation of the collet 38 can be made in order to secure the anchor section 12, notably when the anchor section 12 is threaded. The collet 38 with the fastener 10 can then be moved back into the casing or housing of the joining device 36, for example, in order to minimize interference with the environment.

The casing 44 can be moved in order to reach a position where the adhesive 28 can be applied to the application area of the fastener 10. For example, the casing 44 can be rotated and the collet 38 translates up to a position where the application section 22 faces an adhesive dosing outlet.

The adhesive 28 can be applied to the application section 22 as depicted in Fig. 3B. The adhesive can be applied by a bonding device 46 comprising a nozzle (or dosing outlet) for applying the adhesive. The flange can be eccentrically aligned with the nozzle during the step of applying the adhesive. Besides, the anchor axis may form an angle between 10deg and 80 deg with regard to the axis of the nozzle Xn.

A rotation of the fastener 10 around its shaft during the application allows a better repartition of the adhesive 28. The rotation prevents the adhesive 28 of moving to a single direction or even dripping of the fastener due to gravitation. The rotation also prevent a possible contamination of the joining device with adhesive.

Once the adhesive 28 has been applied to the application section 22, the fastener 10 can be joined to the workpiece 24. For instance, the joining device moves up to the workpiece and to the area where the fastener has to be fixed. The joining device and more particularly the casing with the collet may for instance rotate, as visible in Fig. 3C to align the fastener and the workpiece. The fastener is aligned such that the anchor axis X is sensibly orthogonal to the plane formed by the workpiece 24.

The rotation of the fastener 10 can eventually continue during the rotation of the casing in order to maintain a good repartition of the adhesive on the application area.

The collet 38 translates up to the workpiece 24 such that the flange 18 (and more particularly the application area) faces the workpiece and then enters into contact with the workpiece 24. By entering into contact with the workpiece 24 and due to the pushing forces, the adhesive 28 squeezes up to the edge of the flange.

A UV-light 48 being either incorporated within the joining device or being a separated piece is switched on in order to cure the adhesive visible on the edge of the flange and directly at the fillet. The UV-light 48 can be circularly arranged such that UV radiation is provided simultaneously around the flange 18. UV radiation are thus directed all around the flange and can cure the adhesive at the fillet or at the edge. The flange is thus concentrically arranged with regard to the UV light. In another embodiment, the UV light can be moved around the edge of the flange to cure the adhesive. The UV light can be arranged according to any form. More particularly, the repartition of the UV light depends on the shape of the flange. The UV radiations encompass the entire edges of the flange.

The UV-curing allows the adhesive 28 to solidify at the edge of the flange 18. The UV curing generates a sufficient fixation of the fastener until the adhesive underneath the flange and not cured by the UV radiation, because not visible from the outside, is cured to at least green strength.

Eventually, the joining device 36 may rotate the fastener 10 when said fastener 10 contacts the workpiece 24 in order to better spread the adhesive 28. More particularly, when the flange 18 comprises notches, it allows enough adhesive to flow within the opening formed by the notches. By rotating, the edges of the notches push the adhesive 28 which remain in a particular amount at such edges when the rotation stops. Thus the rotation enable enough adhesive to remain within the openings. Said adhesive is then cured via the UV radiation.

The present fastener 10 can be used with a wide range of UV-dual-curing adhesives with particularly good bonding performance, notably with regard to the epoxy system often used. This allows for using a broad range of UV-dual-curing adhesives with superior bonding performance compared to known epoxy system. The present fastener 10 can be used with workpieces made of a wide range of materials such as steel, high strength steel, thermoset polymers, Aluminium, notably aluminium having any kind of thickness, and particularly with a thickness of less than 1mm, thermoplastic materials, low energy plastics like polypropylene and polyethylene (notably with UV-dual-curing acrylics specially designed for those low-energy surfaces).

The fasteners may be packed and shipped as bulk good without any climate control or shelf-life while adhesives may be transported with state-of-the-art processes. The bonding cycle time is particularly reduced with less than 10 seconds for immediate loadability.

## Claims

1. Method for joining a fastener (10) to a workpiece, the method comprising the steps of:
- providing a workpiece (24);
- providing a fastener (10) including an anchor section which extends between a first end section and a second end section along an anchor axis (X); a flange (18) formed on and extending radially to the first end section of the anchor section (12), the flange being radially delimited by an outer edge (20), and the flange at least partially forms an application section (22), the application section being at a non-zero distance from the outer edge, wherein the fastener (10) is a one-piece metal fastener (10);
- applying an adhesive (28) on the application section,
**characterized in that** the adhesive (28) is an UV-curing adhesive and the method further comprises the steps of
- arranging the flange of the fastener (10) on the carrier surface of the workpiece (24) and pushing said flange (18) against the workpiece such that the adhesive is squeezed toward the outer edges until it reaches the outer edges of the flange (20);
- curing the adhesive (28) at the outer edge (20) of the flange by applying an UV radiation, such that the fastener is pre-assembled to the workpiece;
- finishing the curing of the adhesive (28) underneath the flange by anaerobical curing.

2. Method according to claim 1, wherein the outer edge (20) of the flange is provided with notches (32) which are regularly arranged around the outer edges (20), and wherein the adhesive is squeezed up to the notches such that the adhesive extends at least partially in the notches.

3. Method according to claim 2, wherein the fastener (10) provided with adhesive rotates when facing the workpiece such that the edges of the notches distribute the adhesive.

4. Method according to any of claims 1 to 3, further comprising the step of applying an activator (30) on the application section before applying the adhesive.

5. Method according to claim 4 wherein the adhesive (28) entirely covers the activator (30) provided on the application section.

6. Method according to any of claims 1 to 5, further comprising the step of applying an activator on a carrier surface of the workpiece (24).

7. Method according to any of claims 1 to 6, wherein the flange (18) comprises a groove (26) and the groove delimits the application section (22), and wherein the adhesive (28) flows beyond and above the groove (26) to reach the outer edge when the flange (18) is pushed against the workpiece.

8. Method according to any of claims 1 to 7, wherein the adhesive (28) is applied through a bonding device (46) and a continuous rotation is applied to the fastener (10) or the bonding device during the step of applying the adhesive.

9. Method according to claim 8, wherein the shaft-shaped anchor section is held by a collet during the step of applying the adhesive, and wherein the collet is connected to a rotation module and rotates the fastener (10).

10. Method according to claim 8 or claim 9, wherein the bonding device (46) further comprises a nozzle for applying the adhesive, and wherein the flange is eccentrically aligned with the nozzle during the step of applying the adhesive.

11. Fastener (10) for implementing the method according to any of claims 1 to 10, comprising an anchor section (12) which extends between a first end section and a second end section along an anchor axis; a flange formed on and extending radially to the first end section of the anchor section, the flange being delimited by an outer edge, and the flange at least partially forms an application section, the application section being arranged at the centre of the stud, and being at a non-zero distance from the outer edge, wherein the fastener (10) is a one-piece metal fastener (10), and the outer edge of the flange is provided with notches which are regularly arranged around the outer edges.

12. Fastener (10) according to claim 11, wherein the flange (18) is a circular flange with a flange diameter, and the notches (32) are partly circular and have a notch diameter, and wherein the notch diameter is between 1/20 and 1/5 of the flange diameter.

13. Fastener (10) according to claim 12, comprising at least three notches (32).

14. Fastener according to any of claims 11 to 13, wherein the flange (18) comprises a groove (26), the groove (26) being arranged between the notches and the application section.

15. Fastener according to any of claims 11 to 14, wherein the groove is circular, wherein the groove s at least 0,5 mm deep, and wherein the groove extends at least at 0.5mm from the notches..
